# EUROPÄISCHE PATENTSCHRIFT

(11) **EP 4 209 123 B1**
(45) Veröffentlichungstag und Bekanntmachung des Hinweises auf die Patenterteilung: **18.12.2024**
(21) Anmeldenummer: 22200164.6
(22) Anmeldetag: 07.10.2022
(51) Int. Cl.: A01D 41/12

(54) **DRESCHKORB FÜR EINEN MÄHDRESCHER**
THRESHING CONCAVE FOR A COMBINE HARVESTER
CONTRE-BATTEUR POUR MOISSONNEUSE-BATTEUSE

(30) Priorität: 02.11.2021 DE 102021128494
(43) Veröffentlichungstag der Anmeldung: 12.07.2023
(73) Patentinhaber: Deere & Company, Moline, IL 61265 (US)
(72) Erfinder: Jung, Daniel, 68163 Mannheim (DE); Zollondz, Jonas, 68163 Mannheim (DE); Broschart, Marco, 68163 Mannheim (DE); Lettau, Michael, 68163 Mannheim (DE)
(74) Vertreter: Holst, Sönke

(56) Entgegenhaltungen:
- US-A- 4 711 075
- US-A1- 2017 290 263
- US-A1- 2019 254 233
- US-A1- 2020 404 850
- US-B2- 10 314 232
- US-B2- 9 763 390

## Beschreibung

Die Erfindung betrifft einen Dreschkorb für einen Mähdrescher nach dem Oberbegriff des Anspruchs 1.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich aus Bogen- und Querleisten zusammen, die zwischen sich Zwischenräume belassen. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Bei unterschiedlicher Beschaffenheit des Ernteguts lassen sich Bestandteile mehr oder weniger gut herauslösen, so dass es sinnvoll ist, die Dreschkörbe dem jeweiligen Erntegut anpassen zu können.

So kann es beispielsweise sinnvoll sein, am Einlass des Dreschkorbs als zusätzliches Dreschmittel eine Erntegutbearbeitungseinrichtung vorzusehen, die zwischen einer aktiven und inaktiven Position beweglich ist, üblicherweise drehbar, um das Erntegut am Einlass des Dreschkorbs mehr oder weniger aggressiv zu dreschen. Hierzu sei beispielsweise auf den Stand der Technik nach DE 1 130 641 A, DE 1 130 640 A, US 1 334 910 A, EP 2 036 425 A1 und DE 10 2014 224 780 A1 verwiesen.

Weiterhin sind auch unterschiedliche, stromab des Einlasses des Dreschkorbs angeordnete, verstellbare Elemente vorgeschlagen worden, wie Fingerrechen, die zwischen einer etwa tangential zur Dreschtrommel verlaufenden, aktiven Stellung und einer ausgeschwenkten Stellung bewegbar sind (US 2 457 259 A, FR 637 181 A, US 4 875 891 A, FR 2 621 216 A1, DE 10 2009 047 287 A1), oder so genannte Entgrannerplatten, die zwischen benachbarten Dreschleisten in eine geschlossene Position gebracht werden können, damit das Erntegut nicht zwischen den Dreschleisten hindurchlaufen kann und somit durch die längere Einwirkung der Dreschtrommel von den Grannen befreit wird (DE 1 989 612 U). Hierbei ist in der Regel ein Mechanismus vorgesehen, mit dem alle Elemente gemeinsam bewegt werden können, sei es von Hand oder mittels eines fremdkraftbetätigten Aktors, der von der Kabine des Mähdreschers durch einen Bediener oder durch eine Automatik angesteuert werden kann. Analog erfolgt auch die Verstellung der Erntegutbearbeitungseinrichtung am Einlass der Dreschtrommel üblicherweise von Hand oder durch einen Aktor.

Im Stand der Technik sind somit für Dreschkörbe, bei denen sowohl eine am Einlass angeordnete, deaktivierbare Erntegutbearbeitungseinrichtung als auch (stromab des Einlasses des Dreschkorbs angeordnete) verstellbare Elemente vorhanden sind, zwei Betätigungselemente in Form von manuell betätigbaren Hebeln o.ä. oder bei automatischer oder Fern-Betätigung in Form von Aktoren vonnöten, was einen relativ hohen Aufwand mit sich bringt.

Die US 2019/0254233 A1 zeigt einen Axialmähdrescher mit einem Rotor und einem gegenüber dem Rotor verstellbaren Dreschkorb, der mittels eines Aktors in eine inaktive Position verbringbar ist.

### Aufgabe der Erfindung

Die der Erfindung zu Grunde liegende Aufgabe wird darin gesehen, einen Dreschkorb eingangs genannter Art für einen Mähdrescher bereitzustellen, bei dem die erwähnten Probleme nicht oder in vermindertem Maße vorliegen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Dreschkorb für einen Mähdrescher ist mit einer am Dreschkorb angeordneten Erntegutbearbeitungseinrichtung, die zwischen einer aktiven und einer inaktiven Position verstellbar ist, stromab des Einlasses des Dreschkorbs angeordneten, zwischen einer aktiven und einer inaktiven Position verstellbaren Elementen, und einer Verstellmechanik zur getrennten Verstellung der Erntegutbearbeitungseinrichtung und der verstellbaren Elemente versehen, welche ein bewegliches Verstellelement umfasst, das mit der Erntegutbearbeitungseinrichtung und den verstellbaren Elementen gekoppelt ist.

Das Verstellelement ist derart mit der Erntegutbearbeitungseinrichtung und den verstellbaren Elementen gekoppelt, dass in einer ersten Position des Verstellelements die Erntegutbearbeitungseinrichtung und die verstellbaren Elemente in der aktiven Position sind, in einer zweiten Position des Verstellelements die verstellbaren Elemente in der inaktiven Position und die Erntegutbearbeitungseinrichtung in der aktiven Position sind (oder umgekehrt) und in einer dritten Position des Verstellelements die Erntegutbearbeitungseinrichtung und die verstellbaren Elemente in der inaktiven Position sind.

Auf diese Weise können durch ein manuelles oder aktorisch bewerkstelligtes Verstellen nur des Verstellelements, sei es von Hand oder durch einen Aktor, sowohl die Erntegutbearbeitungseinrichtung als auch die verstellbaren Elemente jeweils und getrennt voneinander zwischen einer aktiven und einer inaktiven Position bewegt werden. Es ist daher nur ein einziges Betätigungselement erforderlich.

Es sei noch angemerkt, dass die Erntegutbearbeitungseinrichtung und/oder das verstellbare Element durch das bewegliche Element der Verstellmechanik nicht nur zwischen einer aktiven und inaktiven Position bewegt werden können, sondern bei einer möglichen Ausführungsform auch in eine oder mehrere oder beliebig viele Zwischenpositionen zwischen der aktiven und inaktiven Position bewegbar sein können. Somit kann der Einwirkungsgrad des verstellbaren Elements und/oder der Erntegutbearbeitungseinrichtung in mehr als einer Stufe oder stufenlos variiert werden, jeweils unabhängig voneinander. Weiterhin könnten durch das bewegliche Element der Verstellmechanik noch eine beliebige dritte, vierte, etc. verstellbare Einrichtung des Dreschkorbs bewegt werden.

Die Erntegutbearbeitungseinrichtung kann ein Einlass des Dreschkorbs angebrachter, drehbarer Körper mit daran angebrachten Dreschelementen in Form von Vorsprüngen sein. Die verstellbaren Elemente können Entgrannerplatten oder Fingerleisten sein.

Das Verstellelement kann eine drehbare Scheibe sein, die mit zwei Kurven versehen ist, die jeweils über Nocken und Koppelelemente mit der Erntegutbearbeitungseinrichtung und den verstellbaren Elementen gekoppelt sind.

Der Dreschkorb kann mit einer tangential fördernden Dreschtrommel oder einem axial fördernden Axialdreschrotor zusammenwirken.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Dreschkorb,
- Fig. 2: eine perspektivische Ansicht des vorderen Bereichs des Dreschkorbs aus Figur 1 von unten,
- Fig. 3: eine Ansicht ähnlich der von Figur 2 bei in einer ersten Position befindlichem Verstellelement,
- Fig. 4: eine Ansicht ähnlich der von Figur 2 bei in einer zweiten Position befindlichem Verstellelement, und
- Fig. 5: eine Ansicht ähnlich der von Figur 2 bei in einer dritten Position befindlichem Verstellelement.

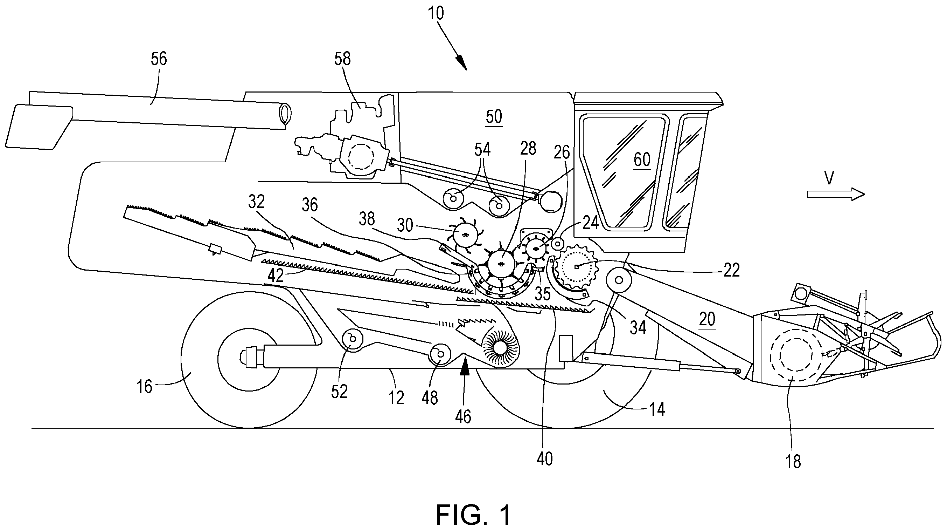

Die Figur 1 zeigt einen selbstfahrenden Mähdrescher 10 mit einem Rahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z.B. über ein abzuerntendes Feld zu bewegen.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, eine Abscheidetrommel 28 sowie einen Abgabeförderer 30 umfasst. Stromab des Abgabeförderers 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine feststehende Abdeckung und unterhalb der Abscheidetrommel 28 ein Abscheidekorb 36 mit verstellbaren Fingerelementen befindet. Unterhalb des unterschlächtig fördernden Abgabeförderers 30 ist ein Trennrost 38 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu vom Dreschkorb 34, vom Abscheidekorb 46 und vom Trennrost 38 sowie vom Strohschüttler 32 zu einer Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Bei einer anderen Ausführungsform könnte das Dreschwerk auch nur die Dreschtrommel 22, die Abstreifertrommel 24 und den Abgabeförderer 30 umfassen, d.h. als konventionelles Tangentialdreschwerk ohne Abscheidetrommel 28 und ohne Fördertrommel 26 ausgeführt sein, bei dem der Abgabeförderer 30 direkt der Dreschtrommel 22 folgt. Im Folgenden beziehen sich alle Richtungsangaben, wie vorn, hinten, ober- und unterhalb auf die Vorwärtsfahrtrichtung V des Mähdreschers 10.

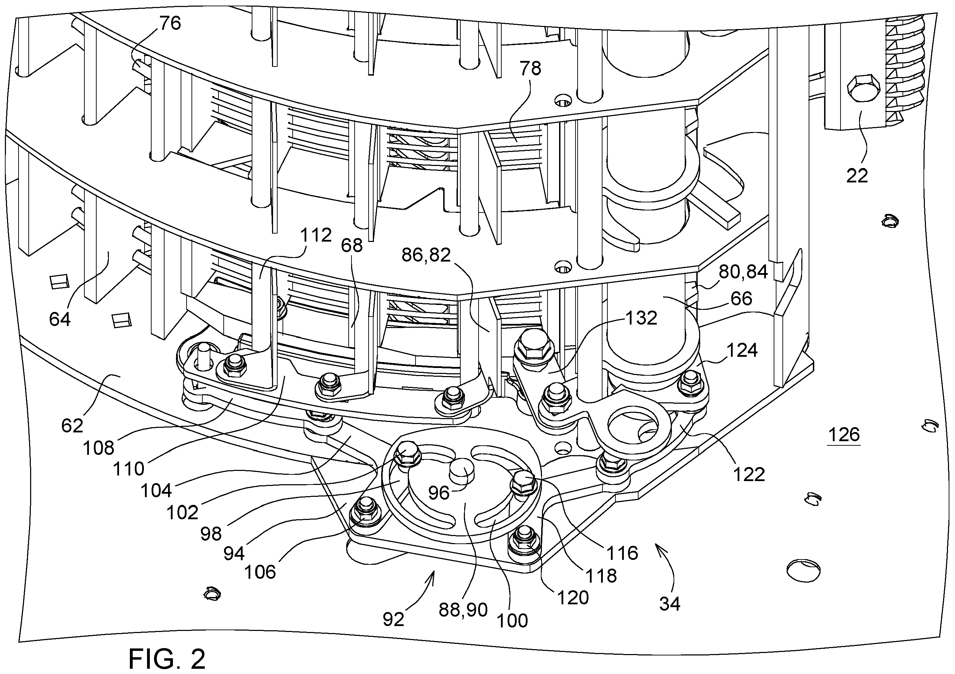

Es wird nun auf die Figuren 2 bis 5 verwiesen. Der Dreschkorb 34 an sich ist von konventioneller Konstruktion und umfasst zwei bogenförmige, an den Radius der Dreschtrommel 22 angepasste Seitenwangen 62, zwischen denen sich (im vorderen Bereich des Dreschkorbs 34) Dreschleisten 68 erstrecken. In Umfangsrichtung der Dreschtrommel 22 auf die Dreschleisten 68 folgend (d.h. in seinem rückwärtigen Bereich umfasst der Dreschkorb 34 weitere Bogenleisten 64, zwischen denen sich in Umfangsrichtung erstreckende Korbdrähte 76 angeordnet sind. Weitere Korbdrähte 78 sind auch zwischen den Dreschleisten 68 angeordnet. Diese sind dünner als die im rückwärtigen Bereich des Dreschkorbs 34 zwischen den Bogenleisten 64 angeordneten Korbdrähte 76, aber in größerer Anzahl vorhanden.

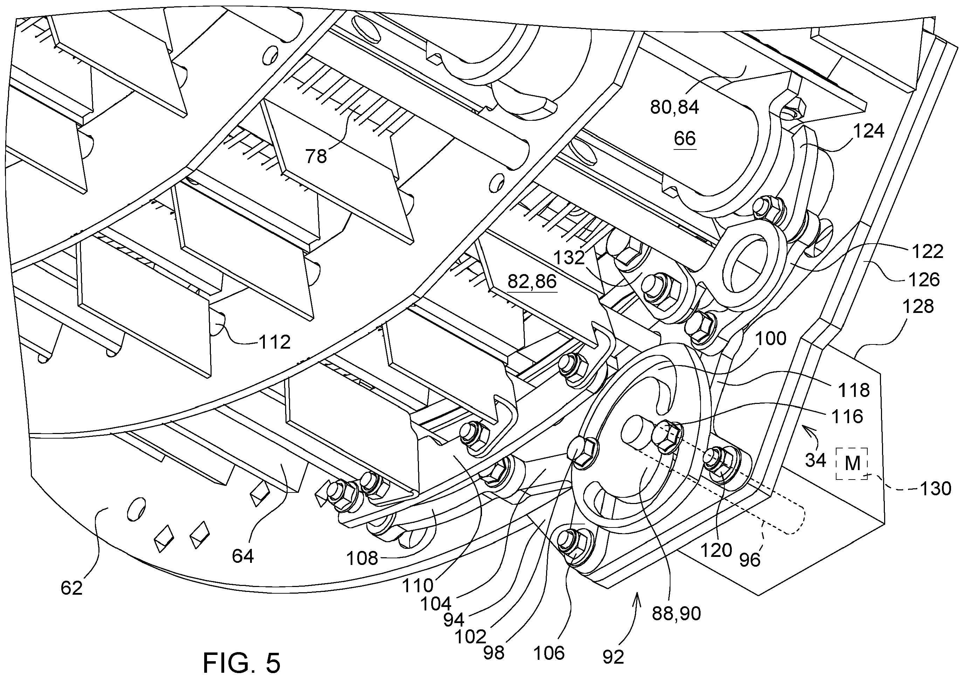

Dem Dreschkorb 34 ist bezüglich der Flussrichtung des Ernteguts eine Erntegutbearbeitungseinrichtung 84 vorgeordnet. Die Erntegutbearbeitungseinrichtung 84 umfasst einen Körper 66, der sich zwischen den Seitenwangen 62 erstreckt und dort um seine Längsachse drehbar gelagert ist. Am Körper 66 sind Dreschelemente 80 angebracht, die durch Rotation des Körpers 66 um seine Längsachse zwischen einer aktiven Position (s. Figuren 2, 3 und 4), in der sie im Eingriff mit dem Erntegut sind und eine gewisse Dreschwirkung bereitstellen, und einer inaktiven Position (Figur 5), in der sie vom Erntegut beabstandet sind, beweglich sind. Insbesondere kann die Erntegutbearbeitungseinrichtung 84 entsprechend EP 2 036 425 A1 oder DE 10 2014 224 780 A1 ausgeführt sein, deren Offenbarung durch Verweis mit in die vorliegenden Unterlagen aufgenommen wird.

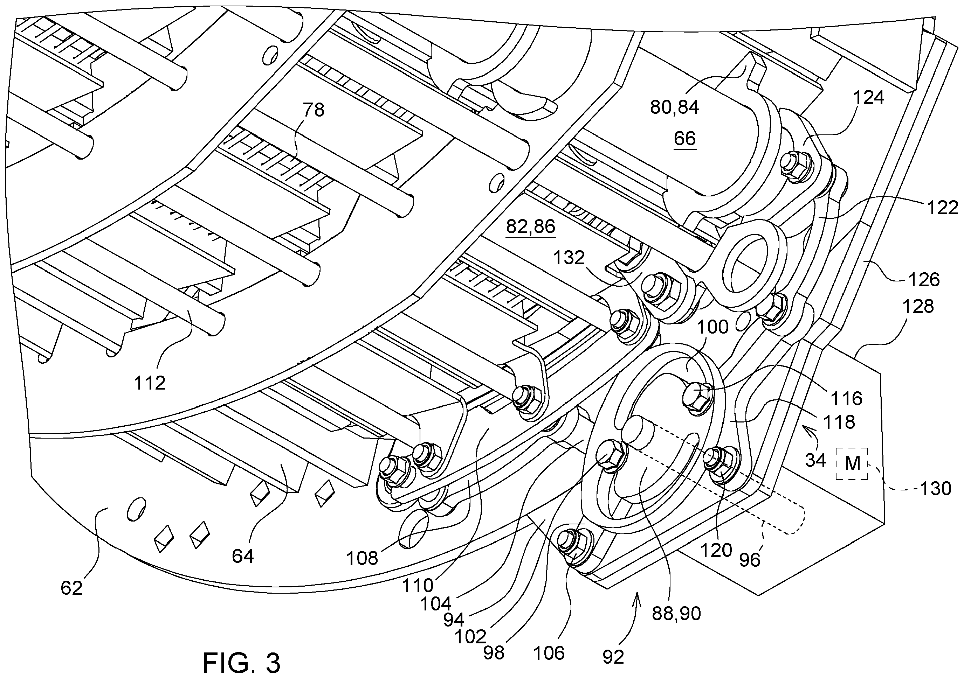

Weiterhin sind dem (durch eine geeignete Mechanik 132, vgl. DE 10 2015 205 992 A1, deren Offenbarung durch Verweis mit in die vorliegenden Unterlagen aufgenommen wird, als herausnehmbarer Einsatz gestalteten) vorderen Bereich des Dreschkorbs 34, in dem sich die Dreschleisten 68 befinden, verstellbare Elemente 86 vorgesehen, die in der dargestellten Ausführungsform als so genannte Entgrannerplatten 82 ausgeführt sind. Die verstellbaren Elemente 86 sind (wie in den Figuren 3 bis 5 erkennbar) zwischen einer geöffneten Position (in Figur 2, 4 und 5 gezeigt) und einer geschlossenen Position (in Figur 3 dargestellt) beweglich. Die Entgrannerplatten 82 dienen dazu, in der geschlossenen Stellung einen Durchtritt von Erntegutbestandteilen (insbesondere Korn) zwischen den Dreschleisten 68 zu vermeiden, sodass das Erntegut im vorderen Bereich des Dreschkorbs intensiver als bei geöffneten Entgrannerplatten 82 bearbeitet wird und frühestens im rückwärtigen Bereich des Dreschkorbs 34 zwischen den Korbdrähten 74 nach unten durchtreten kann. Die Entgrannerplatten 82 sind an sich bekannt (vgl. DE 1 989 612 U), und könnten bei einer anderen Ausführungsform durch verstellbare Fingerleisten (vgl. den eingangs genannten Stand der Technik) als verstellbare Elemente ersetzt werden.

Der Dreschkorb 34 umfasst demnach eine verstellbare Erntegutbearbeitungseinrichtung 84 und die verstellbaren Elemente 86, die getrennt voneinander zwischen einer aktiven und einer inaktiven Position verstellbar sind. Im Stand der Technik sind, wie oben diskutiert, der Erntegutbearbeitungseinrichtung 84 und den verstellbaren Elementen 86 getrennte Betätigungsmittel in Form von manuell betätigten Hebeln oder Aktoren zur Verstellung zugeordnet. Die vorliegende Erfindung befasst sich mit einer Verstellmechanik 92, die es erlaubt, sowohl die Erntegutbearbeitungseinrichtung 84 als auch die verstellbaren Elemente 86 mit einem einzigen Verstellelement 88 zwischen einer aktiven und inaktiven Position zu bewegen, und zwar getrennt voneinander.

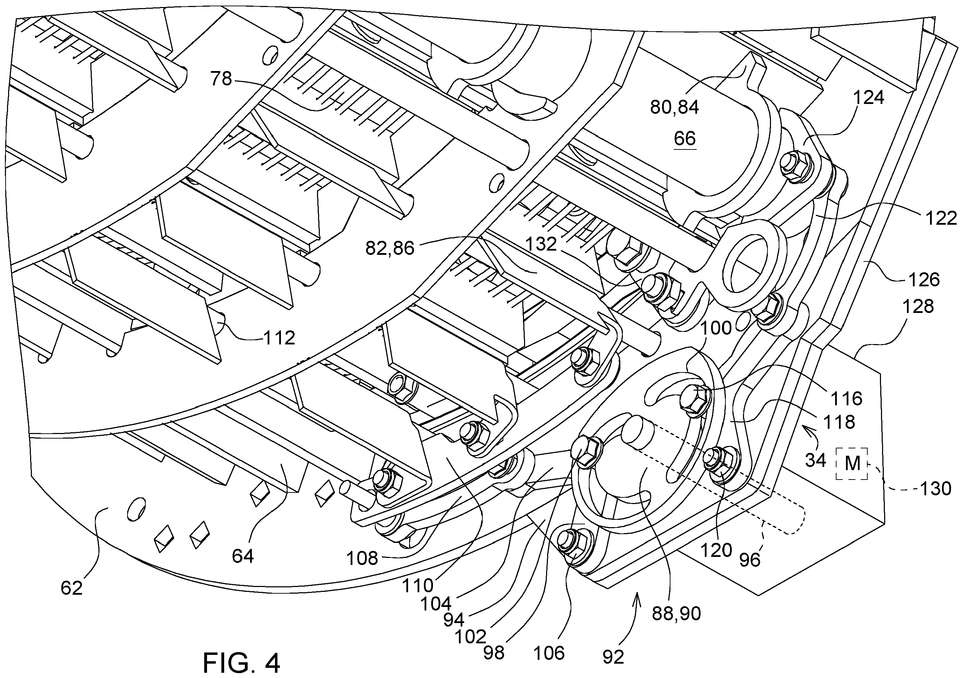

Das als Kurvenscheibe 90 ausgeführte Verstellelement 88 ist mit einer sich orthogonal zur Ebene der Seitenwange 62 erstreckenden, mittig an der Kurvenscheibe 90 angebrachten Welle 96 drehfest verbunden, die drehbar an einem nach unten verlängerten Abschnitt 94 einer der Seitenwangen 62 gelagert ist. Die Welle 96 und somit das Verstellelement 98 sind ihrerseits durch die besagten Betätigungsmittel um ihre Längs- und Drehachse zwischen zwei Endpositionen, von denen eine in Figur 3 und eine in Figur 5 gezeigt ist, drehbar, während die Figur 4 eine Zwischenposition zeigt.

Die Kurvenscheibe 90 umfasst zwei als gekrümmte Langlöcher ausgeführte Kurvenbahnen 98, 100.

Ein in die erste Kurvenbahn 98 eingreifender, damit zusammenwirkender erster Steuernocken 102 ist an einem ersten Hebel 104 befestigt, der mittels einer ersten Lagerung 106 am unteren Bereich des Abschnitts 94 abgestützt ist. Der winkelförmige erste Hebel 104 ist an seinem zweiten Ende drehbar mit einer ersten Schubstange 108 verbunden, die wiederum an ihrem rückwärtigen Ende drehbar mit einer sich nach vorn erstreckenden, ersten Halterung 110 gekoppelt ist. An der ersten Halterung 110 sind die vorderen Enden der verstellbaren Elemente 86 (Entgrannerplatten 82) drehbar angelenkt, die mit ihren rückwärtigen Enden an Querstangen 112 abgestützt sind. Beim Drehen der Kurvenscheibe 90 durch die Welle 96 dreht sich demnach der erste Hebel 104 um die erste Lagerung 106 und bewegt die erste Schubstange 108 nach vorn bzw. hinten, und deren Bewegung wird auf die erste Halterung 110 übertragen, welche die vorderen Enden der verstellbaren Elemente 86 nach vorn und oben bzw. hinten und unten bewegt, während die rückwärtigen Enden der verstellbaren Elemente 86 um die Querstangen 112 rotieren. Somit bewegt die erste Kurvenbahn 98 über den ersten Steuernocken 102, die erste Schubstange 108 und die erste Halterung 110 die verstellbaren Elemente 86 zwischen einer aktiven und einer inaktiven Position. Die erste Kurvenbahn 98 ist derart dimensioniert, dass die verstellbaren Elemente 86 in der linken Endposition des Verstellelements 98 (s. Figur 3) in der aktiven (geschlossenen) Position sind, während sie in der Mittelposition (Figur 4) und der rechten Endposition in der inaktiven (geöffneten) Position sind. Es sei noch angemerkt, dass auch im mittleren Bereich des Dreschkorbs 34 verstellbare Elemente 86 angebracht sind oder angebracht werden können, die durch geeignete Kopplungselemente mit den verstellbaren Elementen 86 gekoppelt werden. Hierzu sind die verstellbaren Elemente 86 drehfest mit den jeweiligen Querstangen 112 verbunden, die ihrerseits um ihre Längsachsen drehbar am Dreschkorb 34 gelagert sind.

Ein in die zweite Kurvenbahn 100 eingreifender zweiter Steuernocken 116 ist mit einem zweiten Hebel 118 verbunden, der mittels einer zweiten Lagerung 120 drehbar am unteren Ende des Abschnitts 94 abgestützt ist. Der winkelförmige zweite Hebel 118 ist an seinem anderen Ende drehbar mit einer zweiten Schubstange 122 verbunden, die ihrerseits mittels einer Drehlagerung an einer mit dem Körper 66 der Erntegutbearbeitungseinrichtung 84 befestigten zweiten Halterung 124 gekoppelt ist. Beim Drehen der Kurvenscheibe 90 durch die Welle 96 dreht sich demnach der zweite Hebel 118 um die zweite Lagerung 120 und bewegt die zweite Schubstange 122 nach oben bzw. unten, und deren Bewegung wird auf die zweite Halterung 124 übertragen, welche den Körper 66 dreht. Somit bewegt die Kurvenbahn 100 über den zweiten Steuernocken 116, die zweite Schubstange 118 und die zweite Halterung 124 die Erntegutbearbeitungseinrichtung 84 zwischen einer aktiven und einer inaktiven Position. Die Kurvenbahn 100 ist derart dimensioniert, dass die Dreschelemente 80 der Erntegutbearbeitungseinrichtung 84 in der linken Endposition des Verstellelements 98 (s. Figur 3) und in der Mittelposition (Figur 4) in der aktiven Position sind, während sie in der rechten Endposition in der inaktiven Position sind.

Die Welle 96 ist, wie in der Figur 3 gezeigt, außerhalb einer Seitenwand 126 des Rahmens 12, an welcher die Seitenwange 62 anliegt, mit einem (einzigen) Betätigungselement 128 verbunden, das einen Aktor 130 umfasst, der als Elektro- oder Hydromotor ausgeführt sein kann und eine Drehung der Welle 96 zwischen den drei beschriebenen Drehstellungen (vgl. Figuren 3 bis 5) erlaubt. Die Welle 96 erstreckt sich somit durch eine Öffnung in der Seitenwand 126. Der Aktor 130 kann mittels einer in der Fahrerkabine 60 angeordneten Bedienerschnittstelle betätigt werden, oder mittels einer Automatik, die den Aktor 130 selbsttätig anhand sensorisch erkannter Eigenschaften des Ernteguts ansteuern kann. In einer anderen Ausführungsform ist das Betätigungselement 128 als Hebel ausgeführt, mit dem die Welle 86 von Hand zwischen den beschriebenen Positionen verdreht werden kann. In jedem Fall vermeidet die erfindungsgemäße Verstellmechanik 92, dass eine zweite Öffnung in der Seitenwand 126 benötigt würde, um eine zweite Welle für eine getrennte Betätigung der verstellbaren Elemente 86 und der Erntegutbearbeitungseinrichtung 84 durch die Seitenwand 126 hindurchzuführen. Die manuelle oder aktorische Verstellung erfolgt außerhalb der Seitenwand 126, was die Zugänglichkeit verbessert und eine evtl. nötige manuelle Verstellung beschleunigt. Auch kann der Aktor 130 außerhalb des Erntegutflusses angebracht werden.

Wenn der Dreschkorb 34 gegenüber der Dreschtrommel 22 abstandsveränderlich ist (vgl. DE 10 2014 209 219 A1) könnte die Öffnung in der Seitenwand 126, durch die sich die Welle 96 erstreckt, als Langloch oder Schlitz ausgeführt werden und das Betätigungselement 128 durch eine entsprechende Kopplung mit dem Dreschkorb 34 mit verstellt werden.

Die beschriebene Verstellmechanik 92 stellt eine erste Position des Verstellelements 88 (linke Endstellung, in Figur 3 gezeigt) bereit, in welcher die Erntegutbearbeitungseinrichtung 84 und die verstellbaren Elemente 86 in der aktiven Position sind, eine zweite Position des Verstellelements 88 (mittlere Position, in Figur 4 gezeigt), in welcher die verstellbaren Elemente 86 in der inaktiven Position und die Erntegutbearbeitungseinrichtung 84 in der aktiven Position sind, und eine dritte Position des Verstellelements 88 (rechte Endstellung, in Figur 5 gezeigt), in welcher die Erntegutbearbeitungseinrichtung 84 und die verstellbaren Elemente 86 in der inaktiven Position sind. Diese drei Positionen haben sich als praxisgerecht erwiesen, denn eine aktive Stellung der verstellbaren Elemente 86 bei inaktiver Erntegutbearbeitungseinrichtung 84 wird in der Praxis nicht benötigt. Sollte das dennoch der Fall sein, könnte durch eine geänderte Form der Kurvenbahnen 98, 100 auch diese vierte Position ermöglicht werden.

## Patentansprüche

1. Dreschkorb (34) für einen Mähdrescher (10), mit:
einer am Dreschkorb (34) angeordneten Erntegutbearbeitungseinrichtung (84), die zwischen einer aktiven und einer inaktiven Position verstellbar ist,
stromab des Einlasses des Dreschkorbs (34) angeordneten, zwischen einer aktiven und einer inaktiven Position verstellbaren Elementen (86), und
einer Verstellmechanik (92) zur getrennten Verstellung der Erntegutbearbeitungseinrichtung (84) und der verstellbaren Elemente (86),
wobei die Verstellmechanik (92) ein bewegliches Verstellelement (88) umfasst, das mit der Erntegutbearbeitungseinrichtung (84) und den verstellbaren Elementen (86) gekoppelt ist,
**dadurch gekennzeichnet, dass** das Verstellelement (88) derart mit der Erntegutbearbeitungseinrichtung (84) und den verstellbaren Elementen (86) gekoppelt ist, dass in einer ersten Position des Verstellelements (88) die Erntegutbearbeitungseinrichtung (84) und die verstellbaren Elemente (86) in der aktiven Position sind, in einer zweiten Position des Verstellelements (88) die verstellbaren Elemente (86) in der inaktiven Position und die Erntegutbearbeitungseinrichtung (84) in der aktiven Position sind und in einer dritten Position des Verstellelements (88) die Erntegutbearbeitungseinrichtung (84) und die verstellbaren Elemente (86) in der inaktiven Position sind.

2. Dreschkorb (34) nach Anspruch 1, wobei das Verstellelement (88) von Hand oder durch einen Aktor (130) verstellbar ist.

3. Dreschkorb (34) nach einem der Ansprüche 1 oder 2, wobei die Erntegutbearbeitungseinrichtung (84) ein am Einlass des Dreschkorbs (34) angeordneter, drehbarer Körper (66) mit daran angebrachten Dreschelementen (80) ist.

4. Dreschkorb (34) nach einem der Ansprüche 1 bis 3, wobei die verstellbaren Elemente (86) Entgrannerplatten (82) sind.

5. Dreschkorb (34) nach einem der Ansprüche 1 bis 4, wobei das Verstellelement (88) eine drehbare Scheibe (90) ist, die mit zwei Kurven (98, 100) versehen ist, die jeweils über Nocken (102, 116) und Koppelelemente (104, 108, 118, 122) mit den verstellbaren Elementen (86) bzw. der Erntegutbearbeitungseinrichtung (84) gekoppelt sind.

6. Mähdrescher (10) mit einem Dreschkorb (34) nach einem der Ansprüche 1 bis 5, welcher mit einer tangential fördernden Dreschtrommel (22) oder einem axial fördernden Axialdreschrotor zusammenwirkt.

## Claims

1. Threshing concave (34) for a combine harvester (10), comprising:
a crop processing device (84) which is arranged on the threshing concave (34) and can be adjusted between an active and an inactive position,
elements (86) which are arranged downstream of the inlet to the threshing concave (34) and can be adjusted between an active and an inactive position, and
an adjustment mechanism (92) for separate adjustment of the crop processing device (84) and of the adjustable elements (86),
wherein the adjustment mechanism (92) comprises a movable adjustment element (88) which is coupled to the crop processing device (84) and to the adjustable elements (86),
**characterized in that** the adjustment element (88) is coupled to the crop processing device (84) and to the adjustable elements (86) in such a way that in a first position of the adjustment element (88) the crop processing device (84) and the adjustable elements (86) are in the active position, in a second position of the adjustment element (88) the adjustable elements (86) are in the inactive position and the crop processing device (84) is in the active position, and in a third position of the adjustment element (88) the crop processing device (84) and the adjustable elements (86) are in the inactive position.

2. Threshing concave (34) according to Claim 1, wherein the adjustment element (88) can be adjusted by hand or via an actuator (130).

3. Threshing concave (34) according to either of Claims 1 and 2, wherein the crop processing device (84) is a rotatable body (66) which is arranged at the inlet to the threshing concave (34) and has threshing elements (80) fitted thereto.

4. Threshing concave (34) according to one of Claims 1 to 3, wherein the adjustable elements (86) are awner plates (82).

5. Threshing concave (34) according to one of Claims 1 to 4, wherein the adjustment element (88) is a rotatable disc (90) provided with two cams (98, 100) which are each coupled via pins (102, 116) and coupling elements (104, 108, 118, 122) to the adjustable elements (86) and the crop processing device (84).

6. Combine harvester (10) comprising a threshing concave (34) according to one of Claims 1 to 5, which interacts with a tangentially conveying threshing drum (22) or an axially conveying axial threshing rotor.

## Revendications

1. Contre-batteur (34) pour une moissonneuse-batteuse (10), ayant :
un dispositif (84) de traitement de la récolte agencé sur le contre-batteur (34), qui est déplaçable entre une position active et une position inactive,
des éléments (86) agencés en aval de l'entrée du contre-batteur (34) et réglables entre une position active et une position inactive, et
un mécanisme de réglage (92) pour le réglage séparé du dispositif (84) de traitement de la récolte et des éléments réglables (86),
le mécanisme de réglage (92) comprenant un élément de réglage mobile (88) qui est relié au dispositif (84) de traitement de la récolte et aux éléments réglables (86), **caractérisé en ce que** l'élément de réglage (88) est relié au dispositif (84) de traitement de la récolte et aux éléments réglables (86) de telle sorte que, dans une première position de l'élément de réglage (88), le dispositif (84) de traitement de la récolte et les éléments réglables (86) sont dans la position active, dans une deuxième position de l'élément de réglage (88), les éléments réglables (86) sont dans la position inactive et le dispositif (84) de traitement de la récolte est dans la position active, et dans une troisième position de l'élément de réglage (88), le dispositif (84) de traitement de la récolte et les éléments réglables (86) sont dans la position inactive.

2. Contre-batteur (34) selon la revendication 1, dans lequel l'élément de réglage (88) est réglable manuellement ou par un actionneur (130).

3. Contre-batteur (34) selon l'une des revendications 1 ou 2, dans lequel le dispositif (84) de traitement de la récolte est un corps rotatif (66) agencé à l'entrée du contre-batteur (34) et sur lequel sont montés des éléments de battage (80).

4. Contre-batteur (34) selon l'une des revendications 1 à 3, dans lequel les éléments réglables (86) sont des plaques d'égrainage (82).

5. Contre-batteur (34) selon l'une des revendications 1 à 4, dans lequel l'élément de réglage (88) est un disque rotatif (90) muni de deux cames (98, 100) reliées respectivement aux éléments réglables (86) et au dispositif (84) de traitement de la récolte par l'intermédiaire de cames (102, 116) et d'éléments de liaison (104, 108, 118, 122).

6. Moissonneuse-batteuse (10) avec un contre-batteur (34) selon l'une des revendications 1 à 5, qui coopère avec un batteur (22) à alimentation tangentielle ou un rotor de battage axial à alimentation axiale.
